# EUROPÄISCHE PATENTSCHRIFT

(11) **EP 4 058 887 B1**
(45) Veröffentlichungstag und Bekanntmachung des Hinweises auf die Patenterteilung: **19.03.2025**
(21) Anmeldenummer: 20803747.3
(22) Anmeldetag: 03.11.2020
(51) Int. Cl.: G06F 8/65, H04W 4/40

(54) **VERFAHREN ZUR ÜBERTRAGUNG VON DATEN**
METHOD FOR TRANSFERRING DATA
PROCÉDÉ DE TRANSFERT DE DONNÉES

(30) Priorität: 15.11.2019 DE 102019007942
(43) Veröffentlichungstag der Anmeldung: 21.09.2022
(73) Patentinhaber: SEW-EURODRIVE GmbH & Co. KG, 76646 Bruchsal (DE)
(72) Erfinder: SCHMIDT, Josef, 76676 Graben-Neudorf (DE); SLISKOVIC, Maja, 76275 Ettlingen (DE); KESSELRING, Jens, 68799 Reilingen (DE); SAUER, Christian, 76689 Karlsdorf-Neuthard (DE)
(86) Internationale Anmeldenummer: PCT/EP2020/025486
(87) Internationale Veröffentlichungsnummer: WO 2021/093984

(56) Entgegenhaltungen:
- US-A1- 2014 247 116
- US-A1- 2017 100 837
- US-A1- 2019 283 648

## Beschreibung

Die Erfindung betrifft ein Verfahren zur Übertragung von Daten von einer Informationsquelle auf ein mobiles System in einer technischen Anlage, welche mindestens eine Übertragungsschnittstelle und mindestens ein mobiles System, welches mindestens eine Kommunikationsschnittstelle aufweist, umfasst, wobei eine Kommunikationsverbindung zwischen der mindestens einen Kommunikationsschnittstelle und der mindestens einen Übertragungsschnittstelle hergestellt wird.

Bei den mobilen Systemen der technischen Anlage handelt es beispielsweise um autonom fahrende Fahrzeuge. Die mobilen Systeme können über Kommunikationsverbindungen, die insbesondere zwischen einer drahtlosen Übertragungsschnittstelle des stationären Teils der technischen Anlage und einer drahtlosen Kommunikationsschnittstelle des mobilen Systems hergestellt werden, mit der Informationsquelle kommunizieren. Mehrere mobile Systeme können auch über Kommunikationsverbindungen, die zwischen drahtlosen Kommunikationsschnittstellen der mobilen Systeme hergestellt werden, miteinander kommunizieren. Die mobilen Systeme erhalten Aufgaben, beispielsweise zum Transport von Gegenständen.

Aus dem Dokument DE 10 2009 043 060 A1 ist eine technische Anlage bekannt, welche eine Basisstation und eine Mehrzahl von mobilen Robotern umfasst. Jeder der mobilen Roboter weist dabei Kommunikationsmittel auf, mit welchen eine Kommunikationsverbindung zu der Basisstation aufbaubar ist, wenn der Roboter sich innerhalb der Sendereichweite der Basisstation befindet. Die Roboter sind mit ihren Kommunikationsmitteln auch in der Lage, Kommunikationsverbindungen zu anderen Robotern aufzubauen.

Aus dem Dokument US 2005/0085222 A1 ist ein Verfahren zum Updaten von Software für mobile Geräte, beispielsweise Mobiltelefone, bekannt. Das Dokument US 6,832,373 B2 offenbart ein System und ein Verfahren zum Updaten und zum Verteilen von Informationen. Aus den Dokumenten CN 101040552 B und WO2006/110991 A1 sind Verfahren und Systeme zur Steuerung von asynchroner Verteilung und Installation von Softwareupdates auf Terminals in einem drahtlosen Netzwerk bekannt. Die Dokumente JP 3669619 B2 und US 6,687,901 B1 offenbaren jeweils ein Verfahren zum Updaten von Software in einem mobilen Kommunikationssystem.

Aus dem Dokument DE10 2018 220 976 A1 sind ein Fahrzeug-Update-System und ein Fahrzeugsoftware-Update-Verfahren bekannt. Dabei erhält ein Fahrzeug Updates von einem Server über eine Funkverbindung.

Aus dem Dokument DE 10 2016 201 279 A1 sind ein Verfahren und eine Vorrichtung zum Überwachen einer Aktualisierung eines Fahrzeugs bekannt. Das Fahrzeug wird dabei in einen sicheren Zustand überführt, und abhängig von einem energetischen Zustand des Fahrzeugs wird ein Steuergerät des Fahrzeugs aktualisiert.

Aus dem Dokument US 2018/0373268 A1 ist ein Verfahren zum Verwalten von Fahrzeugen bekannt. Dabei erhält das Fahrzeug Updates zum Status von Ladestationen.

Aus dem Dokument US 6,832,373 B2 ist ein Verfahren zum Betreiben eines elektronischen Geräts bekannt. Dabei wird ein Update über ein öffentliches Netzwerk empfangen, und ein Teil eines Speichers des Geräts wird aktualisiert.

Aus der US 2017/0100837 A1 ein Verfahren zum Wechseln einer Batterie eines mobilen Roboters bekannt. Dabei werden von dem Roboter aufgenommene Sensordaten zu einem Speicher eines ersten Batteriepacks übertragen, und anschließend wird das erste Batteriepack gegen ein zweites Batteriepack getauscht.

Aus der US 2014/0247116 A1 ist ein mobiler Roboter bekannt, welcher unter anderem einen RFID-Leser aufweist. Ein Ortungsmodul identifiziert, an welchen Stellen Daten von dem RFID-Leser aufgenommen werden.

Aus der US 2019/0283648 A1 ist ein modulares Hilfsenergiemodul für einen mobilen autonomen Roboter bekannt. Das Hilfsenergiemodul weist eine Schnittstelle zur Kommunikation mit dem Roboter auf.

Der Erfindung liegt die Aufgabe zugrunde, ein Verfahren zur Übertragung von Daten von einer Informationsquelle auf ein mobiles System in einer technischen Anlage weiterzubilden. Dabei soll insbesondere sichergestellt werden, dass während der Übertragung von Daten auf das mobile System keine undefinierten Zustände eintreten, und dass insbesondere keine Gefahr von dem mobilen System ausgeht.

Die Aufgabe wird durch ein Verfahren zur Übertragung von Daten von einer Informationsquelle auf ein mobiles System in einer technischen Anlage mit den in Anspruch 1 angegebenen Merkmalen gelöst. Vorteilhafte Ausgestaltungen und Weiterbildungen sind Gegenstand der Unteransprüche.

Es wird ein Verfahren zur Übertragung von Daten von einer Informationsquelle auf ein mobiles System in einer technischen Anlage vorgeschlagen. Die technische Anlage umfasst mindestens eine Übertragungsschnittstelle und mindestens ein mobiles System. Die mindestens eine Übertragungsschnittstelle ist dabei mit der Informationsquelle verbunden. Das mindestens eine mobile System weist mindestens eine Kommunikationsschnittstelle auf. Dabei wird eine Kommunikationsverbindung zwischen der mindestens einen Kommunikationsschnittstelle des mobilen Systems und der mindestens einen Übertragungsschnittstelle der technischen Anlage hergestellt.

Bei der technischen Anlage handelt es sich insbesondere um eine industrielle Anwendung, beispielsweise ein Produktionswerk. Die Informationsquelle, von welcher die Daten auf das mobile System zu übertragen sind, ist beispielsweise eine EDV-Anlage, insbesondere ein Server. Beispielsweise befindet sich die Informationsquelle in der technischen Anlage. Ebenso ist es denkbar, dass die Informationsquelle ein Cloud-System oder ein verteiltes Cluster ist, welches über Internet mit der technischen Anlage verbunden ist.

Bei dem mobilen System in der technischen Anlage handelt es sich um ein autonom fahrendes Fahrzeug in Form von einem in sich geschlossenen System. Das mobile System dient beispielsweise zum Transport von Gegenständen. Das mobile System weist neben der besagten Kommunikationsschnittstelle mindestens eine Recheneinheit auf. Die Recheneinheit beinhaltet Software und weitere Informationen, welche durch externe Informationsquellen aktualisierbar sind. Ferner weist das mobile System einen elektrischen Energiespeicher und eine Antriebseinrichtung auf, welche beispielsweise, einen Elektromotor, ein Getriebe und Antriebsräder umfasst.

Erfindungsgemäß wird das mobile System, wenn Daten von der Informationsquelle auf das mobile System zu übertragen sind, zunächst zu einer Übertragungszone bewegt. Anschließend werden die zu übertragenden Daten über die hergestellte Kommunikationsverbindung von der Informationsquelle auf das mobile System übertragen, während das mobile System in der Übertragungszone verbleibt. Die Übertragungszone ist ein definierter Ort in der technischen Anlage. Das mobile System verbleibt mindestens so lange in der Übertragungszone, bis die Daten vollständig übertragen sind und bis die Daten auch auf Korrektheit geprüft wurden.

Durch das erfindungsgemäße Verfahren ist sichergestellt, dass bei der Übertragung von Daten von der Informationsquelle auf das mobile System signifikant weniger Interferenzen mit anderen Kommunikationen in der technischen Anlage verursacht werden, als bei aus dem Stand der Technik bekannten Übertragungsverfahren. Dies gilt insbesondere, wenn verhältnismäßig große Datenpakete übertragen werden.

Erfindungsgemäß ist das mobile System als autonom fahrendes Fahrzeug ausgebildet, welches mindestens eine Recheneinheit, einen elektrischen Energiespeicher, eine Antriebseinrichtung und eine Bremseinrichtung aufweist.

Erfindungsgemäß wird vor der Übertragung von Daten von der Informationsquelle auf das mobile System geprüft, ob ein elektrischer Energiespeicher des mobilen Systems einen ausreichenden Ladezustand aufweist und/oder ob der elektrische Energiespeicher des mobilen Systems aktuell geladen wird.

Erfindungsgemäß werden die Daten nur dann von der Informationsquelle auf das mobile System übertragen, wenn der elektrische Energiespeicher des mobilen Systems einen ausreichenden Ladezustand aufweist und/oder wenn der elektrische Energiespeicher des mobilen Systems aktuell geladen wird. Somit ist sichergestellt, dass die Energieversorgung des mobilen Systems während der Übertragung der Daten nicht ausfällt, wodurch die Übertragung der Daten unvollständig wäre.

Erfindungsgemäß wird vor der Übertragung von Daten von der Informationsquelle auf das mobile System das mobile System in der Übertragungszone mittels der Bremseinrichtung fixiert. Die Fixierung findet statt, indem die Bremseinrichtung des mobilen Systems aktiviert wird. Die aktivierte Bremseinrichtung verhindert eine Bewegung des mobilen Systems. Somit ist sichergestellt, dass das mobile System während der Übertragung der Daten in der Übertragungszone verbleibt. Durch die Fixierung des mobilen Systems werden insbesondere Menschen und andere mobile Systeme in der technischen Anlage vor Fehlfunktionen des mobilen Systems während der Übertragung von Daten sowie bei fehlerhafter Übertragung von Daten geschützt. Somit wird sichergestellt, dass das mobile System nur bewegbar ist, wenn es sich in einem bekannten Softwarestatus befindet.

Insbesondere handelt es sich bei den zu übertragenden Daten um Softwareupdates für das mobile System. Durch das erfindungsgemäße Verfahren werden fehlerhafte Updates und undefinierte Softwarestati des mobilen Systems, die durch undefinierte Ausgangssituationen, Störungen während der Übertragung oder Installation des Softwareupdates sowie durch Interferenzen durch andere Systeme hervorrufbar sind, vorteilhaft vermieden. Es ist ebenso denkbar, dass es sich bei den zu übertragenden Daten um aktualisierten Daten über die technische Anlage, insbesondere um ein Update einer Karte der technischen Anlage und/oder um ein Update von Verkehrswegen und/oder um ein Update von Verkehrsregeln für die mobilen Systeme handelt.

Gemäß einer vorteilhaften Ausgestaltung der Erfindung werden die zu übertragenden Daten von der Informationsquelle über eine Kommunikationsverbindung zwischen einer ortsgebundenen Übertragungsschnittstelle der technischen Anlage und einer ortsgebundenen Kommunikationsschnittstelle des mobilen Systems übertragen. Die technische Anlage umfasst dabei mindestens eine ortsgebundene Übertragungsschnittstelle, und das mobile System umfasst mindestens eine ortsgebundene Kommunikationsschnittstelle. Eine solche Kommunikationsverbindung zwischen ortsgebundenen Schnittstellen ist verhältnismäßig schnell und störsicher. In der Übertragungszone der technischen Anlage ist dabei sicherzustellen, dass eine ortsgebundene Kommunikation verfügbar ist. Mögliche Ausführungsformen von ortsgebundenen Kommunikationsmethoden sind beispielsweise drahtgebundene Kommunikationsmethoden, induktive Kommunikationsmethoden, lokale Kommunikationsmethoden mittels Licht sowie lokale Kommunikationsmethoden mittels Funk. Ortsgebundene Kommunikationsmethoden sind innerhalb der Übertragungszone verfügbar, in welcher Softwareupdates übertragbar sind. Insbesondere sind ortsgebundene Kommunikationsmethoden exklusiv innerhalb der Übertragungszone und nicht außerhalb der Übertragungszone verfügbar.

Gemäß einer vorteilhaften Ausgestaltung der Erfindung werden die zu übertragenden Daten von der Informationsquelle über eine Kommunikationsverbindung zwischen einer drahtgebundenen Übertragungsschnittstelle der technischen Anlage und einer drahtgebundenen Kommunikationsschnittstelle des mobilen Systems übertragen. Die technische Anlage umfasst dabei mindestens eine drahtgebundene Übertragungsschnittstelle, und das mobile System umfasst mindestens eine drahtgebundene Kommunikationsschnittstelle. Eine solche Kommunikationsverbindung zwischen drahtgebundenen Schnittstellen ist verhältnismäßig schnell und störsicher. In der Übertragungszone der technischen Anlage ist dabei, ebenso wie an dem mobilen System, jeweils ein Steckverbinder vorgesehen.

Gemäß einer anderen vorteilhaften Ausgestaltung der Erfindung werden die zu übertragenden Daten von der Informationsquelle über eine Kommunikationsverbindung zwischen einer drahtlosen Übertragungsschnittstelle der technischen Anlage und einer drahtlosen Kommunikationsschnittstelle des mobilen Systems übertragen. Die technische Anlage umfasst dabei mindestens eine drahtlose Übertragungsschnittstelle, und das mobile System umfasst mindestens eine drahtlose Kommunikationsschnittstelle. Eine solche Kommunikationsverbindung zwischen drahtlosen Schnittstellen ist verhältnismäßig flexibel. Insbesondere ist keine exakte Positionierung des mobilen Systems in Bezug auf einen Steckverbinder in der Übertragungszone der technischen Anlage erforderlich.

Gemäß einer vorteilhaften Weiterbildung der Erfindung fragt das mobile System, bevor das mobile System zu der Übertragungszone bewegt wird, über eine Kommunikationsverbindung zwischen einer drahtlosen Übertragungsschnittstelle der technischen Anlage und einer drahtlosen Kommunikationsschnittstelle des mobilen Systems bei der Informationsquelle an, ob zu übertragende Daten vorliegen. Vorzugsweise stellt das mobile System diese Anfragen zu vorgegebenen Zeitpunkten und/oder periodisch. Die Informationsquelle beantwortet die besagten Anfragen und informiert das mobile System, ob zu übertragende Daten, beispielsweise Softwareupdates, vorliegen.

Gemäß einer weiteren vorteilhaften Weiterbildung der Erfindung wird das mobile System, bevor das mobile System zu der Übertragungszone bewegt wird, von der Informationsquelle über eine Kommunikationsverbindung zwischen einer drahtlosen Übertragungsschnittstelle und einer drahtlosen Kommunikationsschnittstelle des mobilen Systems informiert, wenn zu übertragende Daten vorliegen. Explizite, regelmäßige Anfragen des mobilen Systems sind in diesem Fall nicht erforderlich.

Gemäß einer bevorzugten Ausgestaltung der Erfindung wird vor der Übertragung von Daten von der Informationsquelle auf das mobile System geprüft, ob mindestens eine Kommunikationsverbindung zwischen einer Übertragungsschnittstelle der technischen Anlage und einer Kommunikationsschnittstelle des mobilen Systems eine ausreichende Qualität aufweist. Die Qualität der Kommunikationsverbindung zwischen einer drahtlosen Übertragungsschnittstelle der technischen Anlage und einer drahtlosen Kommunikationsschnittstelle des mobilen Systems ist beispielsweise durch nachfolgend genannte Messwerte, sowie durch Kombinationen dieser Messwerte, bestimmbar:
- Signalstärke am Eingang eines Empfängers einer Kommunikationsschnittstelle,
- Prozentsatz der von der Kommunikationsschnittstelle erfolgreich empfangenen Telegramme,
- Bitfehlerrate in den von der Kommunikationsschnittstelle empfangenen Telegramme,
- Durchschnittliche Verzögerung der Telegramme,
- Datenübertragungsrate,
- Jitter in der Verzögerung,
- Aktuelle Auslastung der Kommunikationsschnittstelle.

Erfindungsgemäß werden nach der Übertragung der Daten von der Informationsquelle auf das mobile System die übertragenen Daten überprüft. Die Überprüfung der übertragenen Daten erfolgt beispielsweise durch Vergleich einer Checksumme. Die Fixierung des mobilen Systems wird nur dann aufgehoben, wenn die übertragenen Daten korrekt sind. Somit wird verhindert, dass ein mobiles System nach fehlerhafter Datenübertragung wieder in Betrieb geht. Wenn es sich bei den übertragenen Daten um ein Softwareupdate handelt, so wird vorzugsweise die korrekte Funktionsweise der neu Installierten Software vor der Freigabe der Bewegungsfähigkeit des mobilen Systems geprüft.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
Figur 1: eine schematische Darstellung einer technischen Anlage und
Figur 2: ein Flussdiagramm von Schritten eines Verfahrens zur Übertragung von Daten.

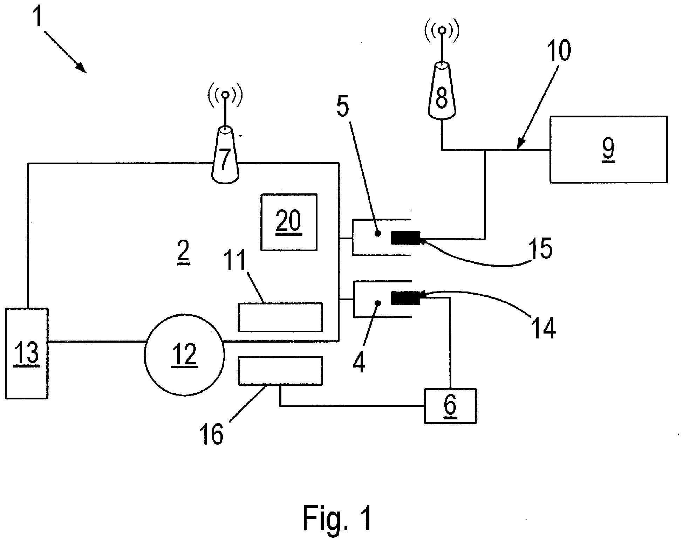

Figur 1 zeigt eine schematische Darstellung einer technischen Anlage 1. Bei der technischen Anlage 1 handelt es sich vorliegend um eine industrielle Anwendung, beispielsweise ein Produktionswerk. Die technische Anlage 1 umfasst ein kabelgebundenes Netzwerk 10 zum Datenaustausch zwischen mehreren Teilnehmern. Das kabelgebundene Netzwerk 10 ist eine Netzwerkstruktur, beispielsweise in Form eines Ethernets, mit der verschiedene Teilnehmer verbunden sind, wie dezentrale Steuerelemente, Schnittstellen zu Systemen der Fabrik-Automation und mehr.

Unter anderem umfasst die technische Anlage 1 mindestens eine Informationsquelle 9, welche in Form eines Digitalrechners oder Servers ausgebildet ist. Die Informationsquelle 9 ist mit dem kabelgebundenen Netzwerk 10 verbunden. Die Informationsquelle 9 weist insbesondere Daten, wie beispielsweise Softwareupdates, auf, welche an Systeme der technischen Anlage 1 zu übertragen sind.

Die technische Anlage 1 umfasst mindestens eine drahtgebundene Übertragungsschnittstelle 15. Die drahtgebundene Übertragungsschnittstelle 15 ist mit dem kabelgebundenen Netzwerk 10 verbunden. Die drahtgebundene Übertragungsschnittstelle 15 ist in Form eines Steckverbinders ausgebildet. Die drahtgebundene Übertragungsschnittstelle 15 dient dazu, Daten zwischen dem kabelgebundenen Netzwerk 10 und einem mit der Übertragungsschnittstelle 15 verbundenen System zu übertragen. Die drahtgebundene Übertragungsschnittstelle 15 ist somit über das Netzwerk 10 mit der Informationsquelle 9 verbunden. Bei der drahtgebundenen Übertragungsschnittstelle 15 handelt es sich um eine ortsgebundene Übertragungsschnittstelle.

Die technische Anlage 1 umfasst mindestens eine drahtlose Übertragungsschnittstelle 8. Die drahtlose Übertragungsschnittstelle 8 ist mit dem kabelgebundenen Netzwerk 10 verbunden. Die drahtlose Übertragungsschnittstelle 8 ist als Gateway, Access-Point oder Base-Station ausgebildet. Die drahtlose Übertragungsschnittstelle 8 dient dazu, Daten zwischen dem kabelgebundenen Netzwerk 10 und Teilnehmern in einem drahtlosen Funknetzwerk zu übertragen. Die drahtlose Übertragungsschnittstelle 8 ist somit über das Netzwerk 10 mit der Informationsquelle 9 verbunden.

Die technische Anlage 1 umfasst mindestens eine elektrische Energiequelle 6. Die Energiequelle 6 ist beispielsweise in Form einer Batterie ausgebildet. In einer anderen Ausführungsform ist die Energiequelle 6 ein Netzteil, welches an ein Energieversorgungsnetz angeschlossen ist, und eine Spannung des Energieversorgungsnetzes in eine passende Form, beispielsweise eine Wechselspannung mit einer anderen Frequenz oder eine Gleichspannung oder eine Wechselspannung mit einer anderen Amplitude, wandelt.

Ferner umfasst die technische Anlage 1 mindestens eine Versorgungsschnittstelle 14, welche mit der Energiequelle 6 verbunden ist. Mittels der Versorgungsschnittstelle 14 ist elektrische Energie von der Energiequelle 6 zu einem mit der Versorgungsschnittstelle 14 verbundenen System übertragbar. Die Versorgungsschnittstelle 14 ist in Form eines Steckverbinders ausgebildet. Auch bei der Versorgungsschnittstelle 14 handelt es sich um eine ortsgebundene Schnittstelle.

Ferner umfasst die technische Anlage 1 mindestens eine primäre Induktionseinheit 16, welche mit der Energiequelle 6 verbunden ist. Mittels der primären Induktionseinheit 16 ist elektrische Energie von der Energiequelle 6 zu einem mit der primären Induktionseinheit 16 verbundenen System übertragbar. Die primäre Induktionseinheit 16 ist beispielsweise in Form einer Spule ausgebildet. Auch bei der primären Induktionseinheit 16 handelt es sich um eine ortsgebundene, aber kontaktlose, Schnittstelle.

Die technische Anlage 1 umfasst eine Mehrzahl von mobilen Systemen 2 zur Ausführung von Aufgaben, beispielsweise zum Transport von Gegenständen. In der hier gezeigten Darstellung ist nur ein mobiles System 2 gezeigt. Bei dem mobilen System 2 in der technischen Anlage 1 handelt es sich insbesondere um ein autonom fahrendes Fahrzeug in Form von einem in sich geschlossenen System.

Das mobile System 2 weist einen elektrischen Energiespeicher auf. Das mobile System 2 weist ferner eine Antriebseinrichtung 12 auf, welche beispielsweise, einen Elektromotor, ein Getriebe und Antriebsräder umfasst. Mittels der Antriebseinrichtung 12 ist das mobile System 2 bewegbar. Das mobile System 2 weist ferner eine Bremseinrichtung 13 auf. Wenn die Bremseinrichtung 13 aktiviert ist, so ist das mobile System 2 fixiert. Die aktivierte Bremseinrichtung 13 verhindert eine Bewegung des mobilen Systems 2.

Das mobile System 2 umfasst mindestens eine drahtgebundene Kommunikationsschnittstelle 5. Die drahtgebundene Kommunikationsschnittstelle 5 ist in Form eines Steckverbinders ausgebildet. Zwischen der drahtgebundenen Kommunikationsschnittstelle 5 des mobilen System 2 und der drahtgebundenen Übertragungsschnittstelle 15 der technischen Anlage 1 ist eine Kommunikationsverbindung herstellbar, über welche Daten zwischen dem kabelgebundenen Netzwerk 10 und dem mobilen System 2 übertragbar sind. Bei der drahtgebundenen Kommunikationsschnittstelle 5 handelt es sich um eine ortsgebundene Übertragungsschnittstelle. Die Kommunikationsverbindung zwischen der drahtgebundenen Kommunikationsschnittstelle 5 und der drahtgebundenen Übertragungsschnittstelle 15 ist nur innerhalb einer Übertragungszone oder an bestimmten Punkten innerhalb der technischen Anlage 1 aufbaubar.

Das mobile System 2 umfasst mindestens eine drahtlose Kommunikationsschnittstelle 7. Zwischen der drahtlosen Kommunikationsschnittstelle 7 des mobilen System 2 und der drahtlosen Übertragungsschnittstelle 8 der technischen Anlage 1 ist eine Kommunikationsverbindung herstellbar, über welche Daten zwischen dem kabelgebundenen Netzwerk 10 und dem mobilen System 2 übertragbar sind.

Das mobile System 2 umfasst eine Ladeschnittstelle 4. Zwischen der Ladeschnittstelle 4 des mobilen System 2 und der Versorgungsschnittstelle 14 ist eine elektrische Verbindung herstellbar. Über die elektrische Verbindung ist elektrische Energie von der Energiequelle 6 der technischen Anlage 1 zu dem elektrischen Energiespeicher des mobilen Systems 2 übertragbar. Durch Übertragung von elektrischer Energie ist der elektrische Energiespeicher des mobilen Systems 2 aufladbar.

Das mobile System 2 umfasst eine sekundäre Induktionseinheit 11. Zwischen der sekundäre Induktionseinheit 11 des mobilen System 2 und der primären Induktionseinheit 16 ist eine kontaktlose induktive Verbindung herstellbar. Über die induktive Verbindung ist elektrische Energie von der Energiequelle 6 der technischen Anlage 1 zu dem elektrischen Energiespeicher des mobilen Systems 2 übertragbar. Durch Übertragung von elektrischer Energie ist der elektrische Energiespeicher des mobilen Systems 2 aufladbar.

Das mobile System 2 weist auch mindestens eine Recheneinheit 20 auf. Die Recheneinheit 20 umfasst beispielsweise einen Prozessor und einen Datenspeicher. Die Recheneinheit 20 beinhaltet Software und weitere Informationen. Insbesondere beinhaltet die Recheneinheit 20 eine Software zum Steuern des mobilen Systems 2. In der Recheneinheit 20 enthaltene Software ist insbesondere durch Übertragung von Daten von der Informationsquelle 9 der technischen Anlage 1 aktualisierbar.

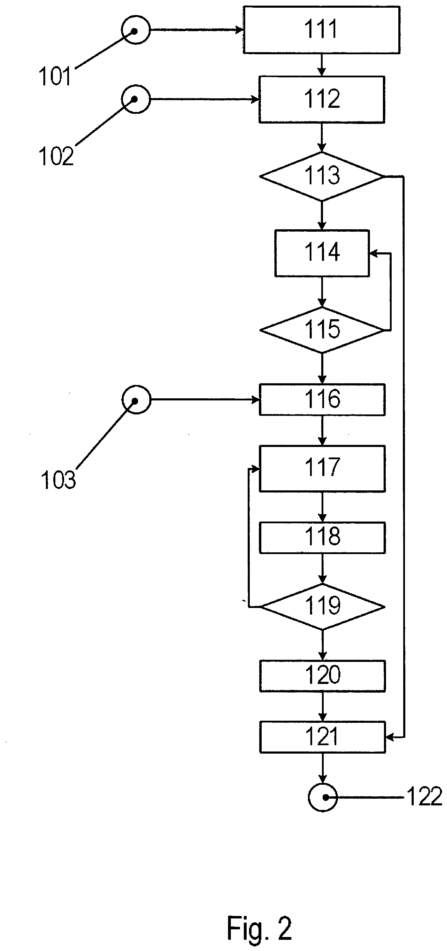

Figur 2 zeigt ein Flussdiagramm von Schritten eines Verfahrens zur Übertragung von Daten von der Informationsquelle 9 der technischen Anlage 1 auf das mobile System 2.

In einem ersten Startschritt 101 wird eine Kommunikationsverbindung zwischen der drahtlosen Übertragungsschnittstelle 8 der technischen Anlage 1 und der drahtlosen Kommunikationsschnittstelle 7 des mobilen System 2 hergestellt.

In einem Schritt 111 fragt das mobile System 2 über die zuvor hergestellte Kommunikationsverbindung zwischen der drahtlosen Übertragungsschnittstelle 8 und der drahtlosen Kommunikationsschnittstelle 7 bei der Informationsquelle 9 an, ob zu übertragende Daten, insbesondere Softwareupdates, vorliegen.

Alternativ zu dem ersten Startschritt 101 wird in einem zweiten Startschritt 102 eine Kommunikationsverbindung zwischen der drahtlosen Übertragungsschnittstelle 8 der technischen Anlage 1 und der drahtlosen Kommunikationsschnittstelle 7 des mobilen System 2 hergestellt. In diesem Fall entfällt der Schritt 111.

In einem Schritt 112 wird das mobile System 2 von der Informationsquelle 9 über die zuvor hergestellte Kommunikationsverbindung zwischen der drahtlosen Übertragungsschnittstelle 8 und der drahtlosen Kommunikationsschnittstelle 7 darüber informiert, dass zu übertragende Daten vorliegen.

In einem Schritt 113 prüft das mobile System, ob die zu übertragende Daten, insbesondere Softwareupdates, für das mobile System 2 relevant sind. Dabei prüft das mobile System 2 beispielsweise, ob die Daten bereits zu einem früheren Zeitpunkt auf das mobile System 2 übertragen wurden, und wie dringend und ressourcen-intensiv in Hinblick auf Zeit, Energie und Bandbreite die Übertragung und Installation der Daten ist.

Wenn die besagten Daten von dem mobilen System 2 als nicht relevant bewertet werden, so setzt das mobile System 2 in einem Schritt 121 seine bisherige Aufgabe oder Operation fort. Es findet also keine Übertragung von Daten statt.

Wenn die besagten Daten von dem mobilen System 2 als relevant bewertet werden, so setzt das mobile System 2 in einem Schritt 114 gegebenenfalls zunächst, kurzfristig, seine bisherige Aufgabe oder Operation fort. Dann wird das mobile System 2 zu einer Übertragungszone in der technischen Anlage 1 bewegt. Gegebenenfalls wird eine Steckverbindung zwischen der ortsgebundenen drahtgebundenen Übertragungsschnittstelle 15 der technischen Anlage 1 und der drahtgebundenen Kommunikationsschnittstelle 5 des mobilen System 2 hergestellt. Gegebenenfalls wird ferner eine Steckverbindung zwischen der Versorgungsschnittstelle 14 der technischen Anlage 1 und der Ladeschnittstelle 4 des mobilen Systems 2 hergestellt. Alternativ oder zusätzlich wird eine kontaktlose induktive Verbindung zwischen der ortsgebundenen primären Induktionseinheit 16 der technischen Anlage 1 und der sekundären Induktionseinheit 11 des mobilen System 2 hergestellt.

In einem Schritt 115 wird geprüft, ob erforderliche Bedingungen zur Übertragung der Daten erfüllt sind. Beispielsweise wird dabei geprüft, ob eine Kommunikationsverbindung zwischen der ortsgebundene drahtgebundenen Übertragungsschnittstelle 15 und der ortsgebundene drahtgebundenen Kommunikationsschnittstelle 5 besteht und eine ausreichende Qualität aufweist. Ferner wird beispielsweise geprüft, ob der elektrische Energiespeicher des mobilen System 2 einen ausreichenden Ladezustand aufweist, oder ob eine Verbindung zwischen der Versorgungsschnittstelle 14 und der Ladeschnittstelle 4 oder eine Verbindung zwischen der primären Induktionseinheit 16 und der sekundären Induktionseinheit 11 besteht, so dass eine Aufladung des elektrischen Energiespeichers während der Übertragung der Daten möglich ist.

Wenn die erforderlichen Bedingungen zur Übertragung der Daten nicht erfüllt sind, so wird der Schritt 114 wiederholt und eine Verbindung wird aufgebaut.

Alternativ zu dem ersten Startschritt 101 und dem zweiten Startschritt 102 wird in einem dritten Startschritt 103 eine Kommunikationsverbindung zwischen der drahtgebundenen Übertragungsschnittstelle 15 der technischen Anlage 1 und der drahtgebundenen Kommunikationsschnittstelle 5 des mobilen System 2 hergestellt. In diesem Fall entfallen die Schritte 111 bis 115.

Wenn die erforderlichen Bedingungen zur Übertragung der Daten erfüllt sind, so wird in einem Schritt 116 das mobile System 2 in der Übertragungszone mittels der Bremseinrichtung 13 fixiert. Dadurch ist eine ungewollte Bewegung des mobilen Systems 2 verhindert. Insbesondere wird dadurch verhindert, dass gegebenenfalls hergestellte ortsgebundene Verbindungen, insbesondere Steckverbindungen, zwischen der ortsgebundenen drahtgebundenen Übertragungsschnittstelle 15 und der ortsgebundenen drahtgebundenen Kommunikationsschnittstelle 5 sowie zwischen der Versorgungsschnittstelle 14 und der Ladeschnittstelle 4 gelöst werden. Im Fall der kontaktlosen Energieübertragung wird verhindert, dass die kontaktlose Energieübertragung nicht mehr stattfindet, beispielsweise wegen zu großer Entfernung zwischen der primären Induktionseinheit 16 und der sekundären Induktionseinheit 11.

In einem Schritt 117 werden die zu übertragenden Daten, insbesondere Softwareupdates, über die bestehende Kommunikationsverbindung von der Informationsquelle 9 auf das mobile System 2 übertragen. Während der Übertragung der Daten verbleibt das mobile System 2 in der Übertragungszone.

In einem Schritt 118 werden die von der Informationsquelle 9 auf das mobile System 2 übertragenen Daten überprüft. Insbesondere werden die Daten dabei auf Vollständigkeit, Korrektheit und eventuelle Softwareupdates auf korrekte Funktionalität geprüft. Die Überprüfung der übertragenen Daten erfolgt beispielsweise durch Vergleich einer Checksumme oder automatisierter Softwaretests.

Das Ergebnis der in dem Schritt 118 durchgeführten Überprüfung wird in einem Schritt 119 ausgewertet. Wenn die Prüfung nicht erfolgreich war, wenn die übertragenen Daten also nicht in Ordnung sind, so werden die fehlerhaften Daten gelöscht, und der Schritt 117 wird wiederholt. Dabei werden die Daten erneut von der Informationsquelle 9 auf das mobile System 2 übertragen.

Wenn die Prüfung erfolgreich war, wenn die übertragenen Daten also in Ordnung sind, so wird in einem Schritt 120 die Fixierung des mobilen Systems 2 mittels der Bremseinrichtung 13 aufgehoben.

In dem dann folgenden Schritt 121 führt das mobile System 2 wieder seine Aufgaben oder Operationen aus.

Das Verfahren endet mit einem Endschritt 122.

### Bezugszeichenliste

- 1: technische Anlage
- 2: mobiles System
- 4: Ladeschnittstelle
- 5: drahtgebundene Kommunikationsschnittstelle
- 6: Energiequelle
- 7: drahtlose Kommunikationsschnittstelle
- 8: drahtlose Übertragungsschnittstelle
- 9: Informationsquelle
- 10: kabelgebundenes Netzwerk
- 11: sekundäre Induktionseinheit
- 12: Antriebseinrichtung
- 13: Bremseinrichtung
- 14: Versorgungsschnittstelle
- 15: drahtgebundene Übertragungsschnittstelle
- 16: primäre Induktionseinheit
- 20: Recheneinheit

## Patentansprüche

1. Verfahren zur Übertragung von Daten von einer Informationsquelle (9) auf ein mobiles System (2) in einer technischen Anlage (1), welche
mindestens eine Übertragungsschnittstelle (8, 15) und
mindestens ein mobiles System (2), welches als autonom fahrendes Fahrzeug ausgebildet ist, und welches mindestens eine Recheneinheit (20), einen elektrischen Energiespeicher, eine Antriebseinrichtung (12), eine Bremseinrichtung (13) und mindestens eine Kommunikationsschnittstelle (5, 7) aufweist, umfasst, wobei
eine Kommunikationsverbindung zwischen der mindestens einen Kommunikationsschnittstelle (5, 7) und der mindestens einen Übertragungsschnittstelle (8, 15) hergestellt wird, und
das mobile System (2) zu einer Übertragungszone bewegt wird, und
die zu übertragenden Daten über die Kommunikationsverbindung von der Informationsquelle (9) auf das mobile System (2) übertragen werden, während das mobile System (2) in der Übertragungszone verbleibt,
**dadurch gekennzeichnet, dass**
vor der Übertragung von Daten von der Informationsquelle (9) auf das mobile System (2) geprüft wird, ob ein elektrischer Energiespeicher des mobilen Systems (2) einen ausreichenden Ladezustand aufweist und/oder ob der elektrische Energiespeicher des mobilen Systems (2) aktuell geladen wird, und dass
die Daten nur dann von der Informationsquelle (9) auf das mobile System (2) übertragen werden, wenn der elektrische Energiespeicher des mobilen Systems (2) einen ausreichenden Ladezustand aufweist und/oder wenn der elektrische Energiespeicher des mobilen Systems (2) aktuell geladen wird, und dass
vor der Übertragung von Daten von der Informationsquelle (9) auf das mobile System (2) das mobile System (2) in der Übertragungszone mittels der Bremseinrichtung (13) fixiert wird, und dass
das mobile System (2) mindestens so lange in der Übertragungszone verbleibt, bis die Daten vollständig übertragen sind und bis die Daten auch auf Korrektheit geprüft wurden.

2. Verfahren nach mindestens einem der vorangegangenen Ansprüche, **dadurch gekennzeichnet, dass**
es sich bei den zu übertragenden Daten
um Softwareupdates für das mobile System (2), und/oder
um aktualisierten Daten über die technische Anlage (1), insbesondere
um ein Update einer Karte der technischen Anlage (1) und/oder
um ein Update von Verkehrswegen und/oder
um ein Update von Verkehrsregeln für die mobilen Systeme (2) handelt.

3. Verfahren nach mindestens einem der vorangegangenen Ansprüche, **dadurch gekennzeichnet, dass**
die zu übertragenden Daten von der Informationsquelle (9) über eine Kommunikationsverbindung zwischen einer ortsgebundenen Übertragungsschnittstelle (8, 15) und einer ortsgebundenen Kommunikationsschnittstelle (5,7) des mobilen Systems (2) übertragen werden.

4. Verfahren nach mindestens einem der vorangegangenen Ansprüche, **dadurch gekennzeichnet, dass**
die zu übertragenden Daten von der Informationsquelle (9) über eine Kommunikationsverbindung zwischen einer drahtgebundenen Übertragungsschnittstelle (15) und einer drahtgebundenen Kommunikationsschnittstelle (5) des mobilen Systems (2) übertragen werden.

5. Verfahren nach mindestens einem der vorangegangenen Ansprüche, **dadurch gekennzeichnet, dass**
die zu übertragenden Daten von der Informationsquelle (9) über eine Kommunikationsverbindung zwischen einer drahtlosen Übertragungsschnittstelle (8) und einer drahtlosen Kommunikationsschnittstelle (7) des mobilen System (2) übertragen werden.

6. Verfahren nach mindestens einem der vorangegangenen Ansprüche, **dadurch gekennzeichnet, dass**
bevor das mobile System (2) zu der Übertragungszone bewegt wird,
das mobile System (2) über eine Kommunikationsverbindung zwischen einer drahtlosen Übertragungsschnittstelle (8) und einer drahtlosen Kommunikationsschnittstelle (7) des mobilen Systems (2) bei der Informationsquelle (9) anfragt, ob zu übertragende Daten vorliegen.

7. Verfahren nach mindestens einem der vorangegangenen Ansprüche, **dadurch gekennzeichnet, dass**
bevor das mobile System (2) zu der Übertragungszone bewegt wird,
das mobile System (2) von der Informationsquelle (9) über eine Kommunikationsverbindung zwischen einer drahtlosen Übertragungsschnittstelle (8) und einer drahtlosen Kommunikationsschnittstelle (7) des mobilen Systems (2) informiert wird, wenn zu übertragende Daten vorliegen.

8. Verfahren nach mindestens einem der vorangegangenen Ansprüche, **dadurch gekennzeichnet, dass**
vor der Übertragung von Daten von der Informationsquelle (9) auf das mobile System (2) geprüft wird, ob mindestens eine Kommunikationsverbindung zwischen einer Übertragungsschnittstelle (8, 15) und einer Kommunikationsschnittstelle (5, 7) des mobilen Systems (2) eine ausreichende Qualität aufweist.

9. Verfahren nach einem der vorangegangenen Ansprüche, **dadurch gekennzeichnet, dass** nach der Übertragung der Daten von der Informationsquelle (9) auf das mobile System (2) die übertragenen Daten überprüft werden, und
die Fixierung des mobilen Systems (2) nur dann aufgehoben wird, wenn die übertragenen Daten korrekt sind.

## Claims

1. Method for transmitting data from an information source (9) to a mobile system (2) in a technical facility (1) that comprises at least one transmission interface (8, 15) and at least one mobile system (2), which is in the form of a self-driving vehicle and has at least one arithmetic logic unit (20), an electrical energy storage device, a drive apparatus (12), a brake apparatus (13) and at least one communication interface (5, 7),
a communication connection being established between the at least one communication interface (5, 7) and the at least one transmission interface (8, 15), and the mobile system (2) being moved to a transmission zone, and
the data to be transmitted being transmitted from the information source (9) to the mobile system (2) by means of the communication connection while the mobile system (2) remains in the transmission zone,
**characterised in that**
before data are transmitted from the information source (9) to the mobile system (2), it is checked whether an electrical energy storage device of the mobile system (2) has sufficient charge and/or whether the electrical energy storage device of the mobile system (2) is currently being charged, and **in that**
the data are transmitted from the information source (9) to the mobile system (2) only when the electrical energy storage device of the mobile system (2) has sufficient charge and/or when the electrical energy storage device of the mobile system (2) is currently being charged, and **in that**
before data are transmitted from the information source (9) to the mobile system (2), the mobile system (2) is secured in the transmission zone by means of the brake apparatus (13), and **in that**
the mobile system (2) remains in the transmission zone at least until the data have been transmitted in full and until the correctness of the data has also been checked.

2. Method according to at least one of the preceding claims,
**characterised in that**
the data to be transmitted are software updates for the mobile system (2) and/or updated data on the technical facility (1), in particular an update of a map of the technical facility (1) and/or an update of routes and/or an update of travel rules for the mobile systems (2).

3. Method according to at least one of the preceding claims,
**characterised in that**
the data to be transmitted from the information source (9) are transmitted by means of a communication connection between a location-bound transmission interface (8, 15) and a location-bound communication interface (5, 7) of the mobile system (2).

4. Method according to at least one of the preceding claims,
**characterised in that**
the data to be transmitted from the information source (9) are transmitted by means of a communication connection between a wired transmission interface (15) and a wired communication interface (5) of the mobile system (2).

5. Method according to at least one of the preceding claims,
**characterised in that**
the data to be transmitted from the information source (9) are transmitted by means of a communication connection between a wireless transmission interface (8) and a wireless communication interface (7) of the mobile system (2).

6. Method according to at least one of the preceding claims,
**characterised in that**
before the mobile system (2) is moved to the transmission zone, the mobile system (2) asks the information source (9), by means of a communication connection between a wireless transmission interface (8) and a wireless communication interface (7) of the mobile system (2), whether there are any data to be transmitted.

7. Method according to at least one of the preceding claims,
**characterised in that**
before the mobile system (2) is moved to the transmission zone, the mobile system (2) is informed by the information source (9), by means of a communication connection between a wireless transmission interface (8) and a wireless communication interface (7) of the mobile system (2), when there are data to be transmitted.

8. Method according to at least one of the preceding claims,
**characterised in that**
before data are transmitted from the information source (9) to the mobile system (2), it is checked whether at least one communication connection between a transmission interface (8, 15) and a communication interface (5, 7) of the mobile system (2) is of sufficient quality.

9. Method according to any of the preceding claims,
**characterised in that**
after the data have been transmitted from the information source (9) to the mobile system (2), the transmitted data are verified, and the mobile system (2) is released from its securing only when the transmitted data are correct.

## Revendications

1. Procédé de transfert de données d'une source d'informations (9) à un système mobile (2) au sein d'une installation technique (1), comprenant
au moins une interface de transfert (8, 15) et
au moins un système mobile (2) conçu comme un véhicule autonome et présentant au moins une unité de calcul (20), un accumulateur d'énergie électrique, un dispositif d'entraînement (12), un dispositif de freinage (13) et au moins une interface de communication (5, 7),
une liaison de communication étant établie entre la au moins une interface de communication (5, 7) et la au moins une interface de transfert (8, 15), et le système mobile (2) étant déplacé vers une zone de transfert, et les données à transférer étant transférées de la source d'informations (9) au système mobile (2) par l'intermédiaire de la liaison de communication tandis que le système mobile (2) demeure dans la zone de transfert,
**caractérisé en ce que**
avant le transfert de données de la source d'informations (9) au système mobile (2), il est vérifié si un accumulateur d'énergie électrique du système mobile (2) présente un état de charge suffisant et/ou si l'accumulateur d'énergie électrique du système mobile (2) est actuellement chargé, et
les données ne sont transférées de la source d'informations (9) au système mobile (2) que si l'accumulateur d'énergie électrique du système mobile (2) présente un état de charge suffisant et/ou si l'accumulateur d'énergie électrique du système mobile (2) est actuellement chargé, et
avant le transfert de données de la source d'informations (9) au système mobile (2), le système mobile (2) est immobilisé dans la zone de transfert au moyen du dispositif de freinage (13), et
le système mobile (2) demeure dans la zone de transfert au moins jusqu'à ce que les données soient entièrement transférées et jusqu'à ce que l'exactitude des données ait également été vérifiée.

2. Procédé selon au moins l'une quelconque des revendications précédentes, **caractérisé en ce que**
les données à transférer sont
des mises à jour logicielles destinées au système mobile (2), et/ou des données actualisées concernant l'installation technique (1), en particulier une mise à jour d'une carte de l'installation technique (1) et/ou
une mise à jour des voies de circulation et/ou
une mise à jour des règles de circulation destinées aux systèmes mobiles (2).

3. Procédé selon au moins l'une quelconque des revendications précédentes, **caractérisé en ce que**
les données à transférer sont transférées à partir de la source d'informations (9) par l'intermédiaire d'une liaison de communication entre une interface de transfert à emplacement fixe (8, 15) et une interface de communication à emplacement fixe (5, 7) du système mobile (2).

4. Procédé selon au moins l'une quelconque des revendications précédentes, **caractérisé en ce que**
les données à transférer sont transférées à partir de la source d'informations (9) par l'intermédiaire d'une liaison de communication entre une interface de transfert filaire (15) et une interface de communication filaire (5) du système mobile (2).

5. Procédé selon au moins l'une quelconque des revendications précédentes, **caractérisé en ce que**
les données à transférer sont transférées à partir de la source d'informations (9) par l'intermédiaire d'une liaison de communication entre une interface de transfert sans fil (8) et une interface de communication sans fil (7) du système mobile (2).

6. Procédé selon au moins l'une quelconque des revendications précédentes, **caractérisé en ce que**
avant que le système mobile (2) ne soit déplacé vers la zone de transfert,
le système mobile (2), par l'intermédiaire d'une liaison de communication entre une interface de transfert sans fil (8) et une interface de communication sans fil (7) du système mobile (2), demande à la source d'informations (9) s'il existe des données à transférer.

7. Procédé selon au moins l'une quelconque des revendications précédentes, **caractérisé en ce que**
avant que le système mobile (2) ne soit déplacé vers la zone de transfert,
le système mobile (2), par l'intermédiaire d'une liaison de communication entre une interface de transfert sans fil (8) et une interface de communication sans fil (7) du système mobile (2), est informé par la source d'informations (9) de l'existence ou non de données à transférer.

8. Procédé selon au moins l'une quelconque des revendications précédentes, **caractérisé en ce que**
avant le transfert de données de la source d'informations (9) au système mobile (2), il est vérifié si au moins une liaison de communication entre une interface de transfert (8, 15) et une interface de communication (5, 7) du système mobile (2) présente une qualité suffisante.

9. Procédé selon l'une quelconque des revendications précédentes, **caractérisé en ce que**
après le transfert des données de la source d'informations (9) au système mobile (2), les données transférées sont vérifiées, et
il n'est mis fin à l'immobilisation du système mobile (2) que si les données transférées sont correctes.
